# EUROPEAN PATENT SPECIFICATION

(11) **EP 4 099 170 B1**
(45) Date of publication and mention of the grant of the patent: **07.02.2024**
(21) Application number: 22179678.2
(22) Date of filing: 17.06.2022
(51) Int. Cl.: G06F 11/34, G06F 16/23, G06F 11/30, G06F 11/32, G06F 21/55, G06F 11/07, H04L 41/16, H04L 41/142, H04L 41/069

(54) **METHOD AND APPARATUS OF AUDITING LOG, ELECTRONIC DEVICE, AND MEDIUM**
VERFAHREN UND VORRICHTUNG ZUR PRÜFUNG EINES PROTOKOLLS, ELEKTRONISCHE VORRICHTUNG UND MEDIUM
PROCÉDÉ ET APPAREIL DE CONTRÔLE DE JOURNAL, DISPOSITIF ÉLECTRONIQUE ET SUPPORT

(30) Priority: 25.06.2021 CN 202110712632
(43) Date of publication of application: 07.12.2022
(73) Proprietor: Apollo Intelligent Connectivity (Beijing) Technology Co., Ltd., Beijing 100176 (CN)
(72) Inventor: WANG, Xiali, Beijing, 100176 (CN)
(74) Representative: Carpmaels & Ransford LLP

(56) References cited:
- CN-A- 108 537 544
- CN-A- 109 284 251

## Description

### TECHNICAL FIELD

The present disclosure relates to a field of a computer technology, in particular to a field of an artificial intelligence technology and a security technology, and specifically to a method and an apparatus of auditing a log, an electronic device, and a medium.

### BACKGROUND

A log is of undoubted importance in a field of a computer information security. With a continuous development of the computer technology, a current log volume is increasing, and a real-time analysis of massive data has become a challenge. In addition, logs generated by various applications may have different formats. When tracing a problem, it may be necessary to open dozens of log files in different formats in more than a dozen applications, which is very inefficient. Therefore, mining a correlation between various types of logs so as to conduct a comprehensive audit on the logs has become a focus of a development of a log audit technology.

CN109284251A discloses a log management method, including: acquiring log information generated by a system and outputting the log information to a Kafka message queue; obtaining the log information generated by the system and outputting the log information to a Kafka message queue; storing the log information in the Kafka message queue to the preset data storage platform according to the preset middleware; if system abnormality is detected, an abnormality mark and an abnormality type corresponding to the system abnormality are obtained; obtaining corresponding log information from the preset data storage platform according to the abnormality identification and the abnormality type, and determining the obtained log information as the abnormality log information; based on the preset graphical analysis tool, the obtained abnormal log information is graphically processed, and the graphical report is generated to display the abnormal log information that has been graphically processed.

### SUMMARY

The present disclosure provides a method of auditing a log audit as defined in claim 1, an apparatus of auditing a log audit as defined in claim 6, an electronic device as defined in claim 7, a medium as defined in claim 8, and a computer program product as defined in claim 9.

According to an aspect of the present disclosure, there is provided a method of auditing a log, including: transmitting a collected log file to a Kafka message queue, so as to arrange the log file in the Kafka message queue; storing the log file in the Kafka message queue directly in a first database, extracting a plurality of fields of the log file in the Kafka message queue, and storing the log file in a second database and transmitting the log file to an elastic search engine according to the plurality of fields extracted; and counting each field of the log file stored in the second database by a distributed processing engine, so as to determine an abnormal log field information.

According to another aspect of the present disclosure, there is provided an apparatus of auditing a log, including: a transmission module configured to transmit a collected log file to a Kafka message queue, so as to arrange the log file in the Kafka message queue; a storage module configured to store the log file in the Kafka message queue directly in a first database, extract a plurality of fields of the log file in the Kafka message queue, and store the log file in a second database and transmit the log file to an elastic search engine according to the plurality of fields extracted; and a distributed processing engine configured to count each field of the log file stored in the second database by a distributed processing engine, so as to determine an abnormal log field information.

According to another aspect of the present disclosure, there is provided an electronic device, including: at least one processor; and a memory communicatively connected to the at least one processor, wherein the memory stores instructions executable by the at least one processor, and the instructions, when executed by the at least one processor, cause the at least one processor to implement the method according to an aspect of the present disclosure.

According to another aspect of the present disclosure, there is provided a non-transitory computer-readable storage medium having computer instructions stored thereon, wherein the computer instructions allow a computer to implement the method according to an aspect of the present disclosure.

According to another aspect of the present disclosure, there is provided a
computer program product containing a computer program, wherein the computer program, when executed by a processor, is allowed to implement the method according to an aspect of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution and do not constitute a limitation to the present disclosure.
FIG. 1 shows a flowchart of a method of auditing a log according to an embodiment of the present disclosure.
FIG. 2 shows a flowchart of a method of auditing a log according to another embodiment of the present disclosure.
FIG. 3 shows a schematic process diagram of a log file according to the embodiments of the present disclosure.
FIG. 4 shows a schematic diagram of an apparatus of auditing a log according to the embodiments of the present disclosure.
FIG. 5 shows a schematic block diagram of an exemplary electronic device for implementing the embodiments of the present disclosure.

### DETAILED DESCRIPTION OF EMBODIMENTS

The following describes exemplary embodiments of the present disclosure with reference to the accompanying drawings, which include various details of the embodiments of the present disclosure to facilitate understanding, and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

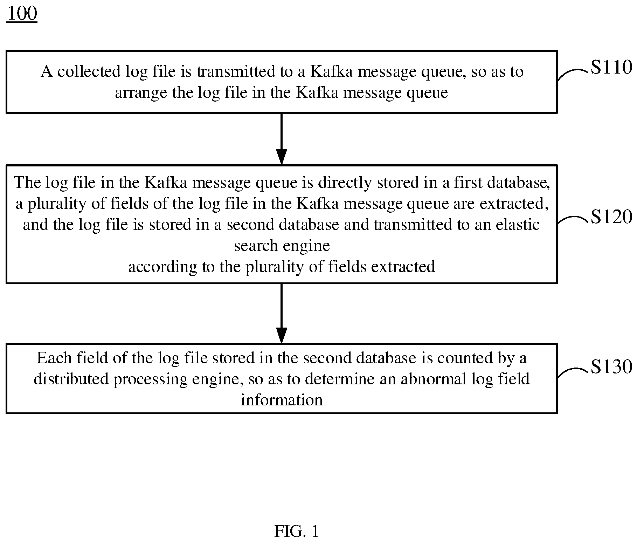

FIG. 1 shows a flowchart of a method 100 of auditing a log according to the embodiments of the present disclosure.

In step S110, a collected log file is transmitted to a Kafka message queue so as to arrange the log file in the Kafka message queue. In some embodiments, the log file may come from various data sources, such as a Kubernetes cluster, a host, a container, an application, a database, and a cloud host, etc.

The Kafka message queue is a high-throughput distributed publish-subscribe message system, which may process all action flow data of a user in a website, such as a content accessed by the user, a content searched by the user, etc. The Kafka message queue may satisfy a throughput requirement of these data by processing a log and a log aggregation. In some embodiments, the log file may be collected from various data sources and arranged in the Kafka message queue according to a predetermined rule, such as a time of the log file arriving at the Kafka message queue, a name of the log file, a type of the log file, etc.

In step S 120, the log file in the Kafka message queue is directly stored in a first database, a plurality of fields of the log file in the Kafka message queue are extracted, and the log file is stored in a second database and transmitted to an elastic search engine according to the plurality of fields extracted.

In some embodiments, in order to trace the source log file, search for the log file and achieve a hierarchical protection of the log file, the source log file and the field-extracted log file are stored in two databases, respectively.

For example, the log file in the Kafka message queue may be directly stored in the first database, that is, the source log file is stored in the first database. The first database may include an Hbase database, which is a distributed, column-oriented structured database. Storing the source log file in the HBase database rather than a system memory may prevent the log file from being lost when the system is restarted.

In addition, a user access level, such as an administrator level, a maintainer level and a general user level, may be set. The administrator level may have an access to the first database to view the source log file. In a case of an abnormal log information, a user with the administrator level may return to the first database and perform a problem tracing by viewing the source log file stored therein.

Further, the log file may contain various fields, such as a time of creating a log, a physical device address, a network IP address, etc. In order to facilitate searching for a specific field, a plurality of fields of the log file in the Kafka message queue may be extracted, and the log file may be stored in a second database and transmitted to an elastic search engine according to the plurality of fields extracted. The elastic search engine (e.g., ElasticSearch) may receive the log file in the Kafka message queue, segment the log file through a word segmentation controller so as to extract a plurality of fields of the log file in the Kafka message queue, calculate a weight of each field, create an index for the log file based on both the calculated weight and the extracted fields, and then search for the log file based on the created index.

A user with the maintainer level may view the log file in the second database to monitor an operating state of each data source. A user with the general user level may only view a log file related to his/her own device, an application used, etc.

In some embodiments, an identity authentication module may be provided in the elastic search engine to authenticate an identity of the data source. For a data source that fails in authentication, such as an untrusted data source or a data source not registered, a log file from the data source is not stored in the second database.

In step S 130, each field of the log file stored in the second database is counted by a distributed processing engine counts, so as to determine an abnormal log field information.

In some embodiments, the distributed processing engine includes Flink to count each field in a data parallel and pipeline manner. Flink is an open source technology stack that may provide batch processing, streaming computing, graph computing, interactive query, machine learning and other functions. For example, Flink may count various data associated with each field, such as a log file volume processed per minute, a log volume from each physical machine, etc. Flink may further associate fields of the log file from each other, such as merging log files containing the same fields, etc.

Further, Flink may associate the counted data associated with each field, such as comparing an average daily log volume from a physical machine in the past week with a current daily log volume from the physical machine, or comparing an average log volume per minute processed in the past 10 minutes with a log volume processed in the latest 1 minute, so as to further determine the abnormal log field information based on the associated/compared fields. For example, if the average daily log volume from the physical machine in the past week is 10,000, while the current daily log volume is only 100, it may be determined that the log field information is abnormal, and a fault tracing is then performed on the physical device. For another example, if the average log volume per minute processed in the past 10 minutes is 23,000, while the log volume processed in the latest 1 minute is only 5,000, an abnormity may be determined, and the source log file may be traced to further check the physical device, the application, etc. that may be faulty.

In addition, Flink may transmit the associated data to a remote dictionary server Redis, and an abnormity may be monitored by the remote dictionary server Redis.

By storing the source log file and the field-extracted log file in two databases respectively, it is possible to determine the abnormal field information by associating the field-extracted log files, then return to the first database and trace a cause of abnormality through the source log file, so that a fast and real-time log audit may be performed on log files in different formats from various applications.

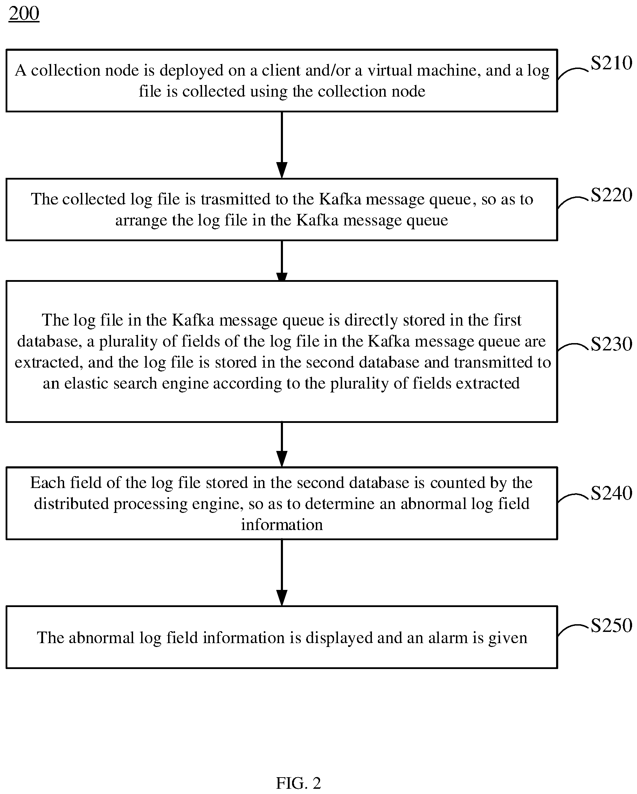

FIG. 2 shows a flowchart of a method 200 of auditing a log according to another embodiment of the present disclosure.

In FIG. 2, steps S220 to S240 correspond to steps S110 to S130 in the method 100, respectively. In addition, the method 200 further includes step S210 prior to step S220. In step S210, a collection node is deployed on a client and/or a virtual machine, and the log file is collected using the collection node.

In some embodiments, a lightweight log collector Filebeat may be deployed on each client and/or virtual machine. Filebeat is a log data collector for a local file, which may monitor a log directory or a specific log file and then transmit them to the Kafka message queue. The log file collected by Filebeat may be arranged according to a subfield such as service, application, host, data center, etc. Further, the log file collected by Filebeat is transmitted to the Kafka message queue and arranged in the Kafka message queue according to a time of the log file arriving at the message queue.

The method 200 may further include step S250 subsequent to step S240. In step S250, the abnormal log field information is displayed and an alarm is issued.

For example, the source log file stored in Hbase may be displayed. For example, each source log file may be displayed according to a subfield such as service, application, host, data center, etc. in Filebeat. Moreover, the field-extracted log file stored in the second database is displayed by means of a graphical display, a report display, a security event alarm, etc., so as to monitor the operation and maintenance.

In some embodiments, an elastic search engine may be used to search for a log file with a specific field, for example, search for a log volume from a physical machine between 10:00-11:00am every Monday.

With the method according to the embodiments of the present disclosure, a Filebeat collection node is deployed on the client/virtual machine that needs a log collection, and the collected log file is arranged according to a subfield such as service, application, host, data center, etc. using the Filebeat collection node, so that the log file transmitted to the Kafka message queue may be preprocessed.

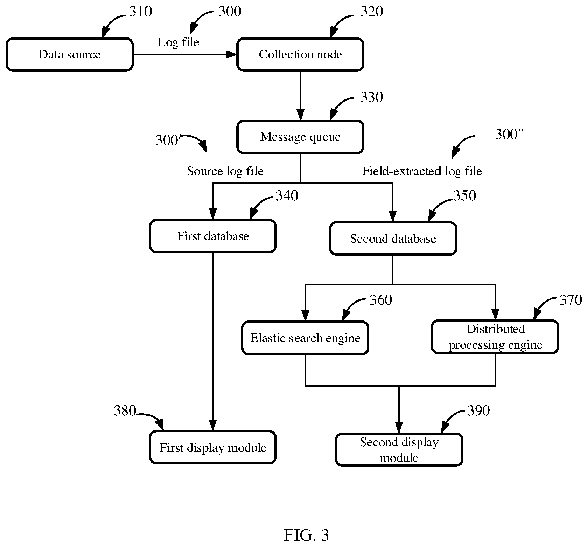

FIG. 3 shows a schematic process diagram of a log file according to the embodiments of the present disclosure.

As shown in FIG. 3, a log file 300 is collected from a data source 310. The data source 310 may include a Kubernetes cluster, a host, a container, an application, a database, and a cloud host, etc. For example, a collection node 320 is deployed at each data source 310, and the log file 300 of each data source 310 is collected by the collection node 320 and arranged according to a predetermined format specified by the collection node 320, for example, according to a subfield such as service, applications, host or data center, etc.

The collection node 320 transmits the collected log file 300 to a Kafka message queue 330, and the log file is arranged in the Kafka message queue 330 according to a time of the log file arriving at the Kafka message queue.

A source log file 300' in the Kafka message queue 330 is stored in a first database 340, and a field-extracted log file 300" is stored in a second database 350.

The field-extracted log file 300" stored in the second database 350 may be further transmitted to an elastic search engine 360, so that the elastic search engine 360 searches for a log file having a predetermined field, such as a log file from a certain physical device, a log file of a specific date, or a log file from a certain network address, from the field-extracted log file 300".

A distributed processing engine 370 may read each field of the log file 300" stored in the second database 350, so as to count and associate the fields from each other, such as comparing an average daily log volume from a physical machine in the past week with a current daily log volume from the physical machine, or comparing an average log volume per minute processed in the past 10 minutes with a log volume processed in the latest 1 minute. The abnormal log field information may be determined based on a result of counting and correlation.

Finally, a first display module 380 may access the first database 340 to display the source log file 300' stored therein, such as displaying the arranged log file according to the predetermined format specified by the collection node 320, for example, according to the subfield such as service, application, host, data center, etc. A second display module 390 may access the distributed processing engine 370 to display the associated log file, for example, by means of a graphical display, a report display, or a security event alarm. The second display module 390 may further access the elastic search engine 360 to search for the field-extracted log file 300" according to an entered search field.

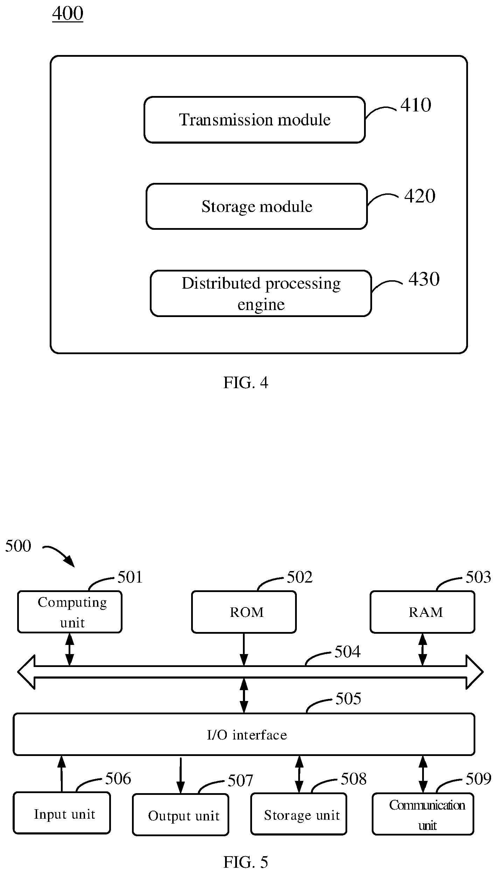

FIG. 4 shows a schematic diagram of an apparatus 400 of auditing a log according to the embodiments of the present disclosure.

As shown in FIG. 4, an apparatus 400 of auditing a log includes a transmission module 410, a storage module 420 and a distributed processing engine 430.

The transmission module 410 is used to transmit a collected log file to a Kafka message queue, so as to arrange the log file in the Kafka message queue. In some embodiments, the log file may come from various data sources, such as a Kubernetes cluster, a host, a container, an application, a database, a cloud host, etc.

The Kafka message queue is a high-throughput distributed publish-subscribe message system, which may process all action flow data of a user in a website, such as a content accessed by the user, a content searched by the user, etc. The Kafka message queue may satisfy a throughput requirement of these data by processing a log and a log aggregation. In some embodiments, the log file may be collected from various data sources and arranged in the Kafka message queue according to a predetermined rule, such as a time of the log file arriving at the Kafka message queue, a name of the log file, a type of the log file, etc.

The storage module 420 is used to store the log file in the Kafka message queue directly in a first database, extract a plurality of fields of the log file in the Kafka message queue, and store the log file in a second database and transmit the log file to an elastic search engine according to the plurality of fields extracted.

In some embodiments, in order to trace the source log file, search for the log file and achieve a hierarchical protection of the log file, the source log file and the field-extracted log file are stored in two databases, respectively.

For example, the log file in the Kafka message queue may be directly stored in the first database, that is, the source log file is stored in the first database. The first database may include an Hbase database, which is a distributed, column-oriented structured database. Storing the source log file in the HBase database rather than a system memory may prevent the log file from being lost when the system is restarted.

In addition, a user access level, such as an administrator level, a maintainer level and a general user level, may be set. The administrator level may have an access to the first database to view the source log file. In a case of an abnormal log information, a user with the administrator level may return to the first database and perform a problem tracing by viewing the source log file stored therein.

Further, the log file may contain various fields, such as a time of creating a log, a physical device address, a network IP address, etc. In order to facilitate searching for a specific field, a plurality of fields of the log file in the Kafka message queue may be extracted, and the log file may be stored in a second database and transmitted to an elastic search engine according to the plurality of fields extracted. The elastic search engine (e.g., ElasticSearch) may receive the log file in the Kafka message queue, segment the log file through a word segmentation controller so as to extract a plurality of fields of the log file in the Kafka message queue, calculate a weight of each field, create an index for the log file based on both the calculated weight and the extracted fields, and then search for the log file based on the created index.

A user with the maintainer level may view the log file in the second database to monitor an operating state of each data source. A user with the general user level may only view a log file related to his/her own device, an application used, etc.

In some embodiments, an identity authentication module may be provided in the elastic search engine to authenticate an identity of the data source. For a data source that fails in authentication, such as an untrusted data source or a data source not registered, a log file from the data source is not stored in the second database.

The distributed processing engine 430 is used to count each field of the log file stored in the second database, so as to determine an abnormal log field information.

In some embodiments, the distributed processing engine includes Flink to count each field in a data parallel and pipeline manner. Flink is an open source technology stack that may provide batch processing, streaming computing, graph computing, interactive query, machine learning and other functions. For example, Flink may count various data associated with each field, such as a log file volume processed per minute, a log volume from each physical machine, etc. Flink may further associate the fields of the log file from each other, such as merging log files containing the same fields, etc.

Further, Flink may associate the counted data associated with each field, such as comparing an average daily log volume from a physical machine in the past week with a current daily log volume from the physical machine, or compare an average log volume per minute processed in the past 10 minutes with a log volume processed in the latest 1 minute, so as to further determine the abnormal log field information based on the associated/compared fields. For example, if the average daily log volume from the physical machine in the past week is 10,000, while the current daily log volume is only 100, it may be determined that the log field information is abnormal, and a fault tracing is then performed on the physical device. For another example, if the average log volume per minute processed in the past 10 minutes is 23,000, while the log volume processed in the latest 1 minute is only 5,000, an abnormity may be determined, and the source log file may be traced to further check the physical device, the application, etc. that may be faulty.

In addition, Flink may transmit the associated data to a remote dictionary server Redis, and an abnormity is monitored by the remote dictionary server Redis.

By storing the source log file and the field-extracted log file in two databases respectively, it is possible to determine the abnormal field information by associating the field-extracted log files, then return to the first database and trace a cause of abnormality through the source log file, so that a fast and real-time log audit may be performed on log files in different formats from various applications.

FIG. 5 shows a schematic block diagram of an exemplary electronic device 500 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, the device 500 includes a computing unit 501 which may perform various appropriate actions and processes according to a computer program stored in a read only memory (ROM) 502 or a computer program loaded from a storage unit 508 into a random access memory (RAM) 503. In the RAM 503, various programs and data necessary for an operation of the device 500 may also be stored. The computing unit 501, the ROM 502, and the RAM 503 are connected to each other through a bus 504. An input/output (I/O) interface 505 is also connected to the bus 504.

A plurality of components in the device 500 are connected to the I/O interface 505, including: an input unit 506, such as a keyboard, or a mouse; an output unit 507, such as displays or speakers of various types; a storage unit 508, such as a disk, or an optical disc; and a communication unit 509, such as a network card, a modem, or a wireless communication transceiver. The communication unit 509 allows the device 500 to exchange information/data with other devices through a computer network such as Internet and/or various telecommunication networks.

The computing unit 501 may be various general-purpose and/or a dedicated processing assemblies having processing and computing capabilities. Some examples of the computing units 501 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 501 executes various methods and processing described above, such as method 100 or 200. For example, in some embodiments, the above methods may be implemented as a computer software program which is tangibly embodied in a machine-readable medium, such as the storage unit 508. In some embodiments, the computer program may be partially or entirely loaded and/or installed in the device 500 via the ROM 502 and/or the communication unit 509. The computer program, when loaded in the RAM 503 and executed by the computing unit 501, may execute one or more steps in the methods described above. Alternatively, in other embodiments, the computing unit 501 may be configured to execute a method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to overcome the defects of difficult management and weak business expansion in traditional physical hosts and VPS ("Virtual Private Server", or "VPS" for short) services. The server may also be a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, and improvements made within the principles of the present disclosure shall be contained in the scope of protection of the present disclosure.

## Claims

1. A method (100) of auditing a log, comprising:
transmitting (S110) a collected log file to a Kafka message queue, so as to arrange the log file in the Kafka message queue;
storing (S120) the log file in the Kafka message queue directly in a first database, extracting a plurality of fields of the log file in the Kafka message queue, and storing the log file in a second database and transmitting the log file to an elastic search engine according to the plurality of fields extracted;
counting (S130) each field of the log file stored in the second database by a distributed processing engine, so as to determine an abnormal log field information; and
giving an alarm (S250) on the abnormal log field information,
wherein the counting (S130) each field of the log file stored in the second database by a distributed processing engine, so as to determine an abnormal log field information comprises:
associating each field of the log file stored in the second database;
determining whether a log volume corresponding to the associated field satisfies a predetermined rule or not; and
determining an associated field corresponding to a log volume not satisfying the predetermined rule as the abnormal log field information.

2. The method of claim 1, further comprising:
deploying a collection node on a client and/or a virtual machine; and
collecting the log file using the collection node.

3. The method of claim 1, wherein the transmitting a collected log file to a Kafka message queue, so as to arrange the log file in the Kafka message queue comprises:
arranging the log file in the Kafka message queue according to a time of the log file arriving at the Kafka message queue.

4. The method of claim 1, wherein the first database comprises an Hbase database.

5. The method of claim 1, wherein the extracting a plurality of fields of the log file in the Kafka message queue comprises:
extracting at least one of a network address field and a host name field in the log file; and
storing the log file in the second database and transmitting the log file to the elastic search engine according to the extracted at least one of the network address field and the host name field, so that the elastic search engine searches each field in the second database.

6. An apparatus (400) of auditing a log, comprising:
a transmission module (410) configured to transmit a collected log file to a Kafka message queue, so as to arrange the log file in the Kafka message queue;
a storage module (420) configured to store the log file in the Kafka message queue directly in a first database, extract a plurality of fields of the log file in the Kafka message queue, and store the log file in a second database and transmit the log file to an elastic search engine according to the plurality of fields extracted;
a distributed processing engine (430) configured to count each field of the log file stored in the second database by a distributed processing engine, so as to determine an abnormal log field information; and
an alarm module configured to give an alarm on the abnormal log field information,
wherein the distributed processing engine (430) is further configured to:
associate each field of the log file stored in the second database;
determine whether a log volume corresponding to the associated field satisfies a predetermined rule or not; and
determine an associated field corresponding to a log volume not satisfying the predetermined rule as the abnormal log field information.

7. An electronic device (500), comprising:
at least one processor (501); and
a memory communicatively connected to the at least one processor, wherein the memory stores instructions executable by the at least one processor, and the instructions, when executed by the at least one processor, cause the at least one processor to implement the method of any claims 1-5.

8. A non-transitory computer-readable storage medium having computer instructions stored thereon, wherein the computer instructions, when executed by a computer, cause the computer to carry out the steps of the method of any claims 1-5.

9. A computer program product containing a computer program, wherein the computer program, when executed by a processor, cause the processor to carry out the steps of any claims 1-5.

## Patentansprüche

1. Verfahren (100) zum Prüfen eines Protokolls, umfassend:
Übertragen (S110) einer erfassten Protokolldatei an eine Kafka-Nachrichtenwarteschlange, um die Protokolldatei in der Kafka-Nachrichtenwarteschlange anzuordnen;
Speichern (S120) der Protokolldatei in der Kafka-Nachrichtenwarteschlange direkt in einer ersten Datenbank, Extrahieren mehrerer Felder der Protokolldatei in der Kafka-Nachrichtenwarteschlange und das Speichern der Protokolldatei in einer zweiten Datenbank und Übertragen der Protokolldatei an eine elastische Suchmaschine gemäß den mehreren extrahierten Feldern;
Zählen (S130) jedes Feldes der Protokolldatei, die in der zweiten Datenbank gespeichert ist, durch eine verteilte Verarbeitungsmaschine, um eine abnormale Protokollfeldinformation zu bestimmen; und
Ausgeben einer Warnung (S250) über die abnormale Protokollfeldinformation,
wobei das Zählen (S130) jedes Feldes der Protokolldatei, die in der zweiten Datenbank gespeichert ist, durch eine verteilte Verarbeitungsmaschine, um eine abnormale Protokollfeldinformation zu bestimmen, umfasst:
Zuordnen jedes Feldes der Protokolldatei, die in der zweiten Datenbank gespeichert ist;
Bestimmen, ob ein dem zugeordneten Feld entsprechendes Protokollvolumen eine vorbestimmte Regel erfüllt oder nicht; und
Bestimmen eines zugeordneten Feldes, das einem Protokollvolumen entspricht, das die vorbestimmte Regel nicht erfüllt, als die abnormale Protokollfeldinformation.

2. Verfahren nach Anspruch 1, ferner umfassend:
Bereitstellen eines Erfassungsknotens auf einem Client und/oder einer virtuellen Maschine; und
Erfassen der Protokolldatei über den Erfassungsknoten.

3. Verfahren nach Anspruch 1, wobei das Übertragen einer erfassten Protokolldatei an eine Kafka-Nachrichtenwarteschlange, um die Protokolldatei in der Kafka-Nachrichtenwarteschlange anzuordnen, umfasst:
Anordnen der Protokolldatei in der Kafka-Warteschlange gemäß dem Zeitpunkt des Eintreffens der Protokolldatei in der Kafka-Nachrichtenwarteschlange.

4. Verfahren nach Anspruch 1, wobei die erste Datenbank eine Hbase-Datenbank umfasst.

5. Verfahren nach Anspruch 1, wobei das Extrahieren mehrerer Felder der Protokolldatei in der Kafka-Nachrichtenwarteschlange umfasst:
Extrahieren von wenigstens entweder einem Netzadressenfeld und/oder einem Hostnamenfeld in der Protokolldatei; und
Speichern der Protokolldatei in der zweiten Datenbank und Übertragen der Protokolldatei an die elastische Suchmaschine gemäß dem extrahierten wenigstens einen von Netzadressenfeld und/oder Hostnamenfeld, so dass die elastische Suchmaschine jedes Feld in der zweiten Datenbank durchsucht.

6. Einrichtung (400) zum Prüfen eines Protokolls, umfassend:
ein Übertragungsmodul (410), das ausgelegt ist zum Übertragen einer erfassten Protokolldatei an eine Kafka-Nachrichtenwarteschlange, um die Protokolldatei in der Kafka-Nachrichtenwarteschlange anzuordnen;
ein Speichermodul (420), das ausgelegt ist zum Speichern der Protokolldatei in der Kafka-Nachrichtenwarteschlange direkt in einer ersten Datenbank, Extrahieren mehrerer Felder der Protokolldatei in der Kafka-Nachrichtenwarteschlange und Speichern der Protokolldatei in einer zweiten Datenbank und Übertragen der Protokolldatei an eine elastische Suchmaschine gemäß den mehreren extrahierten Feldern;
eine verteilte Verarbeitungsmaschine (430), die ausgelegt ist zum Zählen jedes Feldes der Protokolldatei, die in der zweiten Datenbank gespeichert ist, durch eine verteilte Verarbeitungsmaschine, um eine abnormale Protokollfeldinformation zu bestimmen; und
ein Alarmmodul, das ausgelegt ist zum Ausgeben einer Warnung über die abnormale Protokollfeldinformation,
wobei die verteilte Verarbeitungsmaschine (430) ferner ausgelegt ist zum:
Zuordnen jedes Feldes der Protokolldatei, die in der zweiten Datenbank gespeichert ist; Bestimmen, ob ein dem zugeordneten Feld entsprechendes Protokollvolumen eine vorbestimmte Regel erfüllt oder nicht; und
Bestimmen eines zugeordneten Feldes, das einem Protokollvolumen entspricht, das die vorbestimmte Regel nicht erfüllt, als die abnormale Protokollfeldinformation.

7. Elektronische Vorrichtung (500), umfassend:
wenigstens einen Prozessor (501); und
einen Speicher, der kommunikationsfähig mit dem wenigstens einen Prozessor verbunden ist, wobei der Speicher Anweisungen speichert, die von dem wenigstens einen Prozessor ausgeführt werden können, und die Anweisungen, wenn sie von dem wenigstens einen Prozessor ausgeführt werden, den wenigstens einen Prozessor veranlassen, das Verfahren nach einem der Ansprüche 1-5 zu implementieren.

8. Nicht-transitorisches, computerlesbares Speichermedium mit darauf gespeicherten Computeranweisungen, wobei die Computeranweisungen, wenn sie von einem Computer ausgeführt werden, den Computer veranlassen, die Schritte des Verfahrens nach einem der Ansprüche 1-5 auszuführen.

9. Computerprogrammprodukt, das ein Computerprogramm enthält, wobei das Computerprogramm, wenn es von einem Prozessor ausgeführt wird, den Prozessor veranlasst, die Schritte eines der Ansprüche 1-5 auszuführen.

## Revendications

1. Procédé (100) d'audit d'un journal, comprenant :
la transmission (S110) d'un fichier journal collecté à une file d'attente de messages Kafka, de manière à agencer le fichier journal dans la file d'attente de messages Kafka ;
le stockage (S120) du fichier journal dans la file d'attente de messages Kafka directement dans une première base de données, l'extraction d'une pluralité de champs du fichier journal dans la file d'attente de messages Kafka, et le stockage du fichier journal dans une deuxième base de données et la transmission du fichier journal à un moteur de recherche élastique en fonction de la pluralité de champs extraits ;
le comptage (S130) de chaque champ du fichier journal stocké dans la deuxième base de données par un moteur de traitement distribué, de manière à déterminer des informations de champ de journal anormales ; et
l'émission d'une alarme (S250) sur les informations de champ de journal anormales,
le comptage (S130) de chaque champ du fichier journal stocké dans la deuxième base de données par un moteur de traitement distribué, afin de déterminer des informations de champ de journal anormales, comprenant :
l'association de chaque champ du fichier journal stocké dans la deuxième base de données ;
la détermination si un volume de journal correspondant au champ associé satisfait ou non à une règle prédéterminée ; et
la détermination d'un champ associé correspondant à un volume de journal ne satisfaisant pas à la règle prédéterminée en tant qu'informations de champ de journal anormales.

2. Procédé selon la revendication 1, comprenant en outre :
le déploiement d'un noeud de collecte sur un client et/ou une machine virtuelle ; et
la collecte du fichier journal à l'aide du noeud de collecte.

3. Procédé selon la revendication 1, la transmission d'un fichier journal collecté à une file d'attente de messages Kafka, de manière à agencer le fichier journal dans la file d'attente de messages Kafka comprenant :
l'agencement du fichier journal dans la file d'attente de messages Kafka en fonction de l'heure d'arrivée du fichier journal dans la file d'attente de messages Kafka.

4. Procédé selon la revendication 1, la première base de données comprenant une base de données Hbase.

5. Procédé selon la revendication 1, l'extraction d'une pluralité de champs du fichier journal dans la file d'attente de messages Kafka comprenant :
l'extraction d'au moins l'un d'un champ d'adresse réseau et d'un champ de nom d'hôte dans le fichier journal ; et
le stockage du fichier journal dans la deuxième base de données et la transmission du fichier journal au moteur de recherche élastique en fonction de l'extraction d'au moins l'un du champ d'adresse réseau et du champ de nom d'hôte, de sorte que le moteur de recherche élastique effectue une recherche dans chaque champ de la deuxième base de données,

6. Appareil (400) d'audit d'un journal, comprenant :
un module de transmission (410) configuré pour transmettre un fichier journal collecté à une file d'attente de messages Kafka, de manière à agencer le fichier journal dans la file d'attente de messages Kafka ;
un module de stockage (420) configuré pour stocker le fichier journal dans la file d'attente de messages Kafka directement dans une première base de données, extraire une pluralité de champs du fichier journal dans la file d'attente de messages Kafka, et stocker le fichier journal dans une deuxième base de données et transmettre le fichier journal à un moteur de recherche élastique en fonction de la pluralité de champs extraits ;
un moteur de traitement distribué (430) configuré pour compter chaque champ du fichier journal stocké dans la deuxième base de données par un moteur de traitement distribué, de manière à déterminer des informations de champ de journal anormales ; et
un module d'alarme configuré pour émettre une alarme sur les informations de champ de journal anormales,
le moteur de traitement distribué (430) étant en outre configuré pour :
associer chaque champ du fichier journal stocké dans la deuxième base de données ;
déterminer si un volume de journal correspondant au champ associé satisfait ou non à une règle prédéterminée ; et
déterminer un champ associé correspondant à un volume de journal ne satisfaisant pas à la règle prédéterminée en tant qu'informations de champ de journal anormales.

7. Dispositif électronique (500), comprenant :
au moins un processeur (501) ; et
une mémoire connectée de manière communicative à l'au moins un processeur, la mémoire stockant des instructions exécutables par l'au moins un processeur, et les instructions, lorsqu'elles sont exécutées par l'au moins un processeur, amenant l'au moins un processeur à mettre en œuvre le procédé selon l'une quelconque des revendications 1 à 5.

8. Support de stockage non transitoire lisible par ordinateur sur lequel sont stockées des instructions informatiques, les instructions informatiques, lorsqu'elles sont exécutées par un ordinateur, amenant l'ordinateur à réaliser les étapes du procédé selon l'une quelconque des revendications 1 à 5.

9. Produit de programme informatique contenant un programme informatique, le programme informatique, lorsqu'il est exécuté par un processeur, amenant le processeur à réaliser les étapes selon l'une quelconque des revendications 1 à 5.
